# FASCICULE DE BREVET EUROPEEN

(11) **EP 1 726 212 B1**
(45) Date de publication et mention de la délivrance du brevet: **21.11.2007**
(21) Numéro de dépôt: 05291109.6
(22) Date de dépôt: 24.05.2005
(51) Int. Cl.: A23C 19/097, A23C 19/068

(54) **Nouveau procédé de production d'un fromage à croute naturelle fleurie**
Neues Verfahren zur Herstellung von Weichkäse mit natürlichem Oberflächenschimmel
New process for manufacturing a natural fully moulded rind soft cheese

(43) Date de publication de la demande: 29.11.2006
(73) Titulaire: BONGRAIN S.A., 78220 Viroflay (FR)
(72) Inventeur: Kleinmann, Viktor, 49430 Montigne les Rairies (FR)
(74) Mandataire: Corizzi, Valérie

(56) Documents cités:
- EP-A- 0 148 079
- EP-A- 1 041 010
- WO-A-91/14374

## Description

La présente invention a pour objet un nouveau procédé de production d'un fromage à pâte molle, à croûte naturelle fleurie, ce procédé permettant d'obtenir un fromage qui peut être emballé et conservé sous forme de tranches.

Les procédés classiques de production de fromages à pâte molle et à croûte naturelle fleurie comportent généralement les étapes suivantes :
(a) adjonction de présure dans le lait qui conduit à la formation d'un caillé qui est tranché, égoutté, moulé, acidifié, salé ;
(b) le fromage moulé est ensemencé par des moisissures telles que *Penicillium candidum,* qui produit une fleur superficielle ;
(c) développement de la fleur superficielle pendant 7 à 12 jours.

Un fromage obtenu par ce procédé classique se conserve environ 45 jours à une température de 4 à 6°C. Si un tel fromage est tranché et placé dans un emballage hermétique en l'absence d'oxygène, les moisissures, telles que le *Penicillium candidum* et ses enzymes développent un arôme nauséabond, à caractère rance, ammoniaqué ou lipolysé.

Si un tel fromage est tranché et stocké dans un emballage perméable à l'oxygène, le *P. candidum* et/ou des moisissures contaminantes se développent sur la tranche.

Plusieurs solutions ont été proposées pour améliorer la conservation des fromages à croûte naturelle fleurie et à pâte molle :

Dans certains fromages commercialisés sous forme de tranches, la croûte formée par le *Penicillium candidum* est remplacée par une croûte à base d'oxyde de titane qui est inerte et qui ne se dégrade donc pas dans les conditions de stockage. L'inconvénient de ce procédé est que la coloration du fromage est uniforme, artificielle et le fromage ne possède pas d'arôme d'affinage.

Il est également possible de soumettre le fromage à une stérilisation à l'issue de l'étape (c). Toutefois, la stérilisation de fromages à pâte molle et à croûte fleurie conduit à des produits dont l'arôme est affaibli et dont la texture est modifiée par rapport au fromage de départ.

Le document EP-0 148 079 décrit un procédé pour améliorer la durée de conservation des fromages à pâte molle, ce procédé consistant à placer le fromage dans un emballage comprenant une couche intérieure en fibres non tissées absorbantes de l'humidité et une couche extérieure étanche. Le tout est pasteurisé à 100°C pendant 50 minutes. Ce procédé présente l'inconvénient de réduire significativement les qualités organoleptiques du fromage ainsi traité.

Le document WO 91/14374 décrit un procédé pour produire un fromage à pâte molle et à croûte fleurie ayant une durée de vie allongée. Le problème que cherchent à résoudre les auteurs de ce document est la dégradation des fromages de type camembert après 6 à 10 semaines. La solution est l'utilisation d'un fromage frais qui est ensemencé en surface et une incubation dans des conditions contrôlées.

Contrairement à l'invention en référence, ce document concerne uniquement le problème de la dégradation de la partie interne du fromage et non de la croûte.

Le document EP-1 184 298 décrit un procédé de conditionnement de fromages à croûte fleurie. Le but poursuivi par les auteurs est l'amélioration de la conservation de ces fromages, l'obtention de concentrations gazeuses optimales pour l'évolution de la flore de surface. La solution proposée est une enceinte hermétiquement close comportant un matériau à perméabilité sélective permettant de maintenir autour du fromage une atmosphère contrôlée en O₂ et en CO₂.

Seule la stérilisation permet à ce jour de traiter le problème de la conservation du fromage tranché, aussi bien pour la partie croûte que pour la partie interne de la tranche (pâte).

L'objectif que se sont proposé d'atteindre les inventeurs est la mise au point d'un procédé de préparation d'un fromage à croûte naturelle fleurie et à pâte molle, ce procédé permettant la conservation du fromage sous forme de tranches dans des conditions satisfaisantes, tout en conservant au produit ses arômes naturels caractéristiques, son aspect et sa texture.

Un tel objectif a été atteint grâce au procédé de l'invention qui comporte les étapes suivantes :

Le produit de départ est un lait,
(i) à partir du lait, une pâte fromagère est préparée, soit par emprésurage, soit par gélification du lait ;
(ii) le fromage moulé obtenu à l'étape (i) est ensemencé en microorganismes, dont au moins une moisissure ;
(iii) le fromage de l'étape (ii) est affiné;
(iv) le fromage affiné obtenu à l'issue de l'étape (iii) est soumis à un traitement thermique par immersion dans une atmosphère saturée en vapeur d'eau ou dans un bain marie pendant 10 secondes à 5 minutes à une température de 60 à 100°C ;

De préférence, dans une étape (v) le fromage issu de l'étape (iv) est séché.

Le fromage ainsi obtenu peut ensuite être tranché et emballé sous gaz dans un emballage qui fait barrière à l'oxygène. II peut alors être conservé 6 à 8 semaines.

Par fromage à croûte fleurie, on entend un fromage présentant à sa superficie une croûte formée par le développement d'une flore superficielle due à la présence d'au moins une moisissure en éventuelle association avec un ou plusieurs souches bactériennes ou levurières, cette flore contribuant au développement de caractéristiques organoleptiques particulières et d'un aspect de feutrine en superficie du fromage.

Par rapport au procédé consistant à stériliser le fromage à croûte fleurie, l'invention se distingue en ce que l'on procède à un traitement thermique contrôlé, limité à la surface du produit. Un tel traitement se limite à agir sur la surface du fromage sans modifier la texture ni le goût de la partie interne (pâte) du fromage.

Le résultat est l'obtention d'un fromage dont le goût et la texture sont identiques à ceux d'un fromage non traité, qui peut être tranché et conservé sous gaz dans un emballage étanche à l'oxygène, sans développement d'arômes nauséabonds caractéristiques de la dégradation des moisissures telles que *Penicillium candidum* et des levures telles que *Geotricium candidum.*

Le lait qui est utilisé comme produit de départ peut être de toute origine et notamment lait de vache, de chèvre, de brebis, de bufflonne.

Le lait peut éventuellement avoir été enrichi en crème de lait. Il peut également avoir été dégraissé jusqu'à 0% de matière grasse.

Parmi les fromages auxquels peut s'appliquer l'invention on peut citer notamment : le camembert, le brie, le coulommiers, le pont-l'évêque, le saint nectaire.

Les étapes du procédé sont exposées plus en détail ci-dessous, les étapes (i) à (iii) étant bien connues de l'homme du métier qui sait en ajuster les paramètres :

Le lait peut de façon non obligatoire être soumis à un pré-traitement tel que par exemple : une ultrafiltration (obtention d'un pré-fromage liquide) ; un traitement thermique : pasteurisation, stérilisation ; un ensemencement avec *Penicillium candidum.*

Ensuite, de façon traditionnelle, le lait est soumis à un emprésurage : l'adjonction de présure dans le lait conduit à la formation d'un caillé qui est tranché, moulé, égoutté. Dans un premier temps, la présure est additionnée dans le lait porté à une température de 32 à 40°C. Cette adjonction provoque la floculation de la caséine et on obtient le caillé qui est alors soumis à une opération de tranchage avant d'être mis en moule. Dans le moule le caillé est égoutté et prend sa forme définitive.

Selon une variante, au lieu d'un emprésurage, le lait peut être épaissi à l'aide d'un ou de plusieurs agents gélifiants connus pour cet usage : la gélatine, la gomme de guar, le carraghénanne constituent des exemples de tels agents gélifiants.

Après le moulage le caillé, ou la pâte fromagère gélifiée, est acidifié, puis salé par trempage dans un bain de saumure.

L'acidification consiste en une adjonction de bactéries lactiques telles que des streptocoques thermophiles, des lactocoques mésophiles, des lactobacilles ou d'autres acidifiants. L'acidification est faite de telle sorte que le pH soit compris entre 3 et 5,5, de préférence inférieur ou égal à 5,2, encore plus préférentiellement inférieur ou égal à 5,1.

L'ensemencement en microorganisme comporte l'adjonction d'au moins une moisissure, en surface, et éventuellement dans la partie interne (pâte) du fromage, comme par exemple un ensemencement par *Penicillium* ou *Cylindrocarpon,* en particulier *Penicillium candidum, Penicillium camemberti, Penicillium roqueforti, Cylindrocarpon heteronema.* L'ensemencement peut également comporter l'adjonction d'une ou plusieurs levures, comme par exemple des levures de type *Geotrichum.*

Cette étape entraîne la production de la fleur superficielle en une durée de 9 à 11 jours. Ensuite, le fromage est affiné, cette opération consistant à le garder pendant une durée de 6 à 25 jours à une température de 7 à 18°C, avec une hygrométrie contrôlée, en le retournant plusieurs fois à intervalles réguliers. De préférence la durée de l'affinage est comprise entre 8 et 20 jours et encore plus préférentiellement entre 10 et 15 jours. De préférence le degré d'hygrométrie est de 75 à 99% d'humidité, de préférence aux environs de 95% d'humidité.

Selon une variante de l'invention, le fromage de départ est un fromage frais et il est ensemencé en surface par un microorganisme, tel que *Penicillium candidum* ou *Penicillium camemberti* de façon à développer une croûte naturelle fleurie, tout en conservant un coeur de fromage frais. De tels fromages sont notamment décrits dans WO91/14374. Le reste du traitement est le même quel que soit le mode de préparation de la base fromagère.

Après cette étape, le fromage est soumis à un traitement thermique par immersion dans une atmosphère saturée en vapeur d'eau ou dans un bain marie pendant 10 secondes à 5 minutes à une température de 60 à 100°C. De préférence, le traitement thermique consiste en un bain marie d'une durée de préférence de 40 à 80 secondes et avantageusement d'environ 60 secondes. Le bain marie peut comporter dans l'eau du bain un adjuvant de stérilisation, tel que par exemple du sel, de l'acide lactique, de la soude ou tout autre composé connu de l'homme du métier pour cette fonction. On peut aussi prévoir que le traitement thermique soit un traitement par des rayonnements infrarouges. Avantageusement, le traitement thermique se fait à une température allant de 60 à 100°C, de préférence de 85 à 95°C, avantageusement d'environ 90°C. Ce traitement a pour effet de diminuer le nombre de cellules susceptibles de former des colonies (ou CFU pour Colony Forming Units) sans libérer des enzymes de dégradation. Ainsi, il empêche la dégradation du fromage dans les conditions de stockage. En revanche, le goût, l'aspect et la texture de la pâte restent inchangés.

Il est ensuite soumis à un séchage de préférence à une température de -2 à 20°C, avec une hygrométrie de 50 à 90% d'humidité, pendant une durée de 12 à 48 heures.

Le fromage est ensuite tranché et emballé sous gaz dans un emballage qui fait barrière à l'oxygène. Le gaz utilisé pour l'emballage est de l'azote éventuellement en mélange avec du dioxyde de carbone, comprenant de 0 à 50% de dioxyde de carbone et de 50 à 100% d'azote. Le tranchage peut conduire à des tranches plates, mais l'invention concerne aussi des produits tranchés en quartiers tels que des pointes de brie par exemple ou des pointes de camemberts.

L'emballage peut par exemple consister, de façon connue, en une barquette plastique operculée.

Un tel produit peut être conservé au rayon frais (à une température de 2 à 6°C) pendant une durée de 6 à 8 semaines, sans que des arômes nauséabonds ne se développent.

Grâce au procédé de l'invention, on observe une diminution drastique du nombre de spores de moisissures dans la croûte. Cette diminution peut être d'au moins deux unités logarithmiques, de préférence 3, ou encore mieux 4 unités logarithmiques.

Par rapport aux fromages à pâte molle et à croûte fleurie n'ayant pas subi le traitement thermique contrôlé, les fromages obtenus par le procédé de l'invention présentent la particularité d'avoir dans leur croûte une quantité de spores de moisissures et en particulier de *Penicillium candidum,* mesurée en unité logarithmique de spores susceptibles de former des colonies, d'environ 0,75 à 3,5 unités logarithmiques, de préférence de 1 à 3 unités logarithmiques et encore plus préférentiellement de 1,5 à 2,5. Par comparaison, la croûte d'un fromage à pâte molle et à croûte fleurie fabriqué suivant un procédé traditionnel comporte de 6 à 7 unités logarithmiques de spores susceptibles de former des colonies. Un fromage ayant subi une stérilisation a un nombre de spores susceptibles de former des colonies, égal à zéro.

En ce qui concerne la pâte, dans les fromages ayant subi le procédé de l'invention, elle comporte, comme les fromages traditionnels, des ferments lactiques vivants, tandis que les fromages ayant subi une stérilisation ne comportent plus de ferments lactiques vivants.

De tels fromages sont avantageusement conservés emballés sous forme de tranches sous gaz dans un emballage qui fait barrière à l'oxygène.

Les fromages obtenus par le procédé de l'invention ont des caractéristiques qui n'existaient pas dans les fromages de l'art antérieur, ils constituent un autre objet de l'invention.

### EXEMPLES

Dans ces exemples, les conditions de fabrication sont données à titre purement indicatif. Il s'agit pour certains paramètres d'un savoir faire particulier à la tradition fromagère d'une région et ils peuvent être adaptés en fonction de chaque fromage et de l'appréciation de l'homme du métier.

### Exemple 1 : Tranche de fromage à pâte molle avec croûte fleurie avec du Penicillium candidum

Un fromage à pâte molle a été fabriqué sous forme de bûche avec de la présure, des ferments lactiques et du *Penicillium candidum* et en suivant le procédé ci-dessous :
1. Saumurage pendant une durée d'environ 1 heure, 24 heures après la production du caillé (fromage frais) pour assurer un taux de sel adéquat (1 - 2 %) suivi d'un ensemencement par pulvérisation du *Penicillium candidum.*
2. Affinage en haloir à une température de 15°C et une humidité relative d'environ 90 % avec des retournements réguliers, soit quotidiens, soit environ tous les 3 jours.
3. Dès que le fromage est bien couvert de *Penicillium candidum,* normalement entre 7 et 14 jours après sa fabrication, il est plongé dans un bain-marie d'eau chaude d'une température d'environ 85°C pendant une durée de 1 minute et 30 secondes.
4. Le produit est séché et refroidi dans une atmosphère sèche, bien ventilée, dont l'humidité se trouve aux environs de 75% d'humidité relative et la température entre 0 et 4°C.
5. Une fois que la surface du produit est sèche et refroidie, après environ 36 heures, la bûche est coupée en tranches d'une épaisseur d'environ 2 mm.
6. Les tranches sont placées en portions de plusieurs tranches dans une barquette operculée sous atmosphère contrôlée, dont le taux de CO₂ est d'environ 40%, le reste étant du N₂. L'ensemble de la barquette et son opercule ont une perméabilité très limitée à l'oxygène.
7. Le stockage se fait à une température comprise entre 2 et 8°C. Dans ces conditions le produit est encore consommable après 6 à 8 semaines après emballage.

Pendant toute sa durée de commercialisation le produit se caractérise par une croûte fine et blanche, par une texture molle fondante et par le goût d'un Camembert frais.

### Exemple 2 : Tranche de fromage à pâte persillée avec une croûte fleurie avec du Penicillium candidum

Un fromage à pâte molle a été fabriqué en forme de bûche avec de la présure, des ferments lactiques, du *Penicillium roqueforti* pour le caractère persillé et du *Penicillium candidum,* en utilisant le procédé décrit à l'exemple 1 et en appliquant les variations suivantes :

Après le saumurage à l'étape 1 : ensemencement par *Penicillium roqueforti* grâce au piquage vertical (dans la longueur) des bûches avec des aiguilles pour assurer des canaux de croissances du *Penicillium roqueforti* puis ensemencement superficiel par pulvérisation du *Penicillium candidum. Penicillium roqueforti* est également ensemencé dans le lait.

Pendant toute sa durée de commercialisation le produit se caractérise par une croûte fine et blanche, par une texture molle fondante et par un goût fin de Bleu.

### Exemple 3 : Tranche de fromage à pâte molle aromatisé avec des fines herbes et à croûte fleurie avec du Penicillium candidum

Le fromage à pâte molle a été fabriqué en forme de bûche avec de la présure, des ferments lactiques, des aromates visibles de fines herbes et du *Penicillium candidum* suivant le même procédé qu'à l'exemple 1.

Pendant toute sa durée de commercialisation le produit se caractérise par une croûte fine et blanche, par une texture molle fondante et par un goût frais de fines herbes.

### Exemple 4 : Pointe de Brie :

Le fromage à pâte molle a été fabriqué en forme Brie (diamètre entre 140 à 400 mm, hauteur 15 à 35 mm) avec de la présure, des ferments lactiques et du *Penicillium candidum* suivant le même procédé qu'à l'exemple 1, en appliquant les variations suivantes :

Etape 5 : Une fois que la surface du produit est sèche et refroidie, la roue de Brie est découpée sous forme de pointes.

Pendant toute sa durée de commercialisation le produit se caractérise par une croûte fine et blanche, par une texture molle fondante et par un goût de Brie jeune.

### Exemple 5 : Méthode de dénombrement des moisissures:

### Milieu: Extrait de Malt-Agar

### Composition typique :

| | |
|---|---|
| Extrait de malt | 30 g/l |
| Peptone tryptique de soja | 3 g/l |
| Agar-agar | 15g/l |

### Préparation :

• 48 g de milieu sont dissous dans 1 L d'eau distillée
• Chauffage en autoclave à 100°C pendant 40 minutes
• Remplissage en bouteilles de 350 ml
• Stérilisation en autoclave, 121°C, 15 minutes, 1,2 bar

o Le pH de l'agar à l'utilisation doit être de 5,6 +/-0,2
o pour supprimer la croissances des bactéries le pH peut être standardisé avec de l'acide lactique à 4,5

### Méthode de dénombrement :

• Ecroûtage, c'est-à-dire enlever une fine couche de croûte (1 mm d'épaisseur)
• Dilution de 10 g de croûte dans 100 ml d'eau physiologique stérile
• Etalement de la dilution et des dilutions inférieures sur le milieu gélifié en boite de Pétri

### Incubation :

96 heures à 25°C

### Résultat :

Comptage des colonies de moisissures, la croissance éventuelle de levures est facile à distinguer par la taille et l'aspect des colonies.

Sur les fromages des exemples ci-dessus, on a mesuré un nombre de spores avant traitement thermique conforme au procédé de l'invention d'une valeur allant de 6,5 à 7 unités logarithmiques. Après application du procédé de traitement thermique contrôlé de l'invention, la mesure du nombre de spores était d'une valeur allant de 2,0 à 2,5 unités logarithmiques.

## Revendications

1. Procédé de production d'un fromage, le produit de départ étant un lait, comportant les étapes suivantes :
(i) à partir du lait, une pâte fromagère est préparée, soit par emprésurage, soit par gélification du lait ;
(ii) le fromage moulé obtenu à l'étape (i) est ensemencé en microorganismes, dont au moins une moisissure ;
(iii) le fromage de l'étape (ii) est affiné;
ce procédé étant **caractérisé en ce que**
(iv) le fromage affiné obtenu à l'issue de l'étape (iii) est soumis à un traitement thermique par immersion dans une atmosphère saturée en vapeur d'eau ou dans un bain marie pendant 10 secondes à 5 minutes à une température de 60 à 100°C.

2. Procédé selon la revendication 1, **caractérisé en ce que** le lait qui est utilisé comme produit de départ est choisi parmi du lait de vache, de chèvre, de brebis, de bufflonne.

3. Procédé selon l'une quelconque des revendications précédentes, **caractérisé en ce que** le fromage est choisi parmi la liste suivante : le camembert, le brie, le coulommiers, le pont-l'évêque, le saint nectaire.

4. Procédé selon l'une quelconque des revendications précédentes, **caractérisé en ce que** la moisissure est choisie parmi *Penicillium* et *Cylindrocarpon.*

5. Procédé selon la revendication 4, **caractérisé en ce que** la moisissure est *Penicillium candidum.*

6. Procédé selon l'une quelconque des revendications précédentes, **caractérisé en ce que** l'ensemencement comporte également l'adjonction d'une ou plusieurs levures et/ou de bactéries lactiques.

7. Procédé selon l'une quelconque des revendications précédentes, **caractérisé en ce que** le lait est soumis à un pré-traitement choisi parmi : une ultrafiltration ; un traitement thermique ; un ensemencement avec *Penicillium candidum*

8. Procédé selon l'une quelconque des revendications précédentes, **caractérisé en ce que** à l'étape (i) le lait est soumis à un emprésurage : l'adjonction de présure dans le lait conduit à la formation d'un caillé qui est tranché, moulé, égoutté.

9. Procédé selon l'une quelconque des revendications 1 à 7 précédentes, **caractérisé en ce que** à l'étape (i) le lait est épaissi à l'aide d'un ou de plusieurs agents gélifiants.

10. Procédé selon l'une quelconque des revendications précédentes, **caractérisé en ce que** après le moulage le caillé, ou la pâte fromagère gélifiée, est acidifié, puis salé par trempage dans un bain de saumure.

11. Procédé selon la revendication 10, **caractérisé en ce que** l'acidification est faite de telle sorte que le pH soit compris entre 3 et 5,5, de préférence inférieur ou égal à 5,2, encore plus préférentiellement inférieur ou égal à 5,1.

12. Procédé selon l'une quelconque des revendications précédentes, **caractérisé en ce que** le traitement thermique consiste en une immersion dans un bain marie pendant une durée de 40 à 80 secondes et avantageusement d'environ 60 secondes.

13. Procédé selon l'une quelconque des revendications précédentes, **caractérisé en ce que** le traitement thermique se fait à une température allant de 80 à 100°C, de préférence de 85 à 95°C, avantageusement d'environ 90°C.

14. Procédé selon l'une quelconque des revendications précédentes, **caractérisé en ce que** le fromage obtenu à l'étape (iv) est soumis à un séchage.

15. Procédé selon l'une quelconque des revendications précédentes, **caractérisé en ce que** le séchage se fait à une température de -2 à 20°C, avec une hygrométrie de 50 à 90% d'humidité, pendant une durée de 12 à 48 heures.

16. Procédé selon l'une quelconque des revendications précédentes, **caractérisé en ce qu**'il comporte en outre une étape de tranchage.

17. Procédé selon l'une quelconque des revendications précédentes, **caractérisé en ce qu**'il comporte en outre une étape d'emballage sous gaz dans un emballage qui fait barrière à l'oxygène.

18. Procédé selon la revendication 17, **caractérisé en ce que** le gaz comprend de 0 à 50% de dioxyde de carbone et de 50 à 100% d'azote.

19. Procédé selon la revendication 17, **caractérisé en ce que** l'emballage est une barquette plastique operculée.

20. Fromage à pâte molle et à croûte fleurie, susceptible d'être obtenu par le procédé selon l'une quelconque des revendications 1 à 19, **caractérisé en ce qu**'il a dans sa croûte une quantité de spores de moisissures, mesurée en unité logarithmique de spores susceptibles de former des colonies, d'environ 0,75 à 3,5 unités.

21. Fromage selon la revendication 20, **caractérisé en ce que** la moisissure est *Penicillium candidum.*

22. Fromage selon la revendication 20 ou la revendication 21, ayant dans sa croûte une quantité de spores de moisissures de 1 à 3 unités logarithmiques et encore plus préférentiellement de 1,5 à 2,5 unités.

23. Fromage selon l'une quelconque des revendications 20 à 22, **caractérisé en ce qu**'il comporte dans sa pâte des ferments lactiques vivants.

24. Fromage selon l'une quelconque des revendications 20 à 23, **caractérisé en ce qu**'il est emballé sous forme de tranche sous gaz dans un emballage qui fait barrière à l'oxygène.

## Claims

1. Process for the production of a cheese, the starting product being a milk, comprising the following steps:
(i) starting from the milk, a cheese body is prepared, either by renneting or by gelling the milk;
(ii) the moulded cheese obtained in step (i) is seeded with microorganisms, including at least one mould;
(iii) the cheese from step (ii) is refined;
the process being **characterised in that**
(iv) the refined cheese obtained following step (iii) is subjected to heat treatment by immersion for from 10 seconds to 5 minutes at a temperature of from 60 to 100°C in an atmosphere saturated with water vapour or in a water bath.

2. Process according to claim 1, **characterised in that** the milk used as the starting product is selected from cow's milk, goat's milk, ewe's milk, buffalo's milk.

3. Process according to any one of the preceding claims, **characterised in that** the cheese is selected from the following list: Camembert, Brie, Coulommiers, Pont l'Evêque, Saint-Nectaire.

4. Process according to any one of the preceding claims, **characterised in that** the mould is selected from *Penicillium* and *Cylindrocarpon.*

5. Process according to claim 4, **characterised in that** the mould is *Penicillium candidum.*

6. Process according to any one of the preceding claims, **characterised in that** the seeding also comprises the addition of one or more yeasts and/or lactic acid bacteria.

7. Process according to any one of the preceding claims, **characterised in that** the milk is subjected to a pretreatment selected from: ultrafiltration, heat treatment, seeding with *Penicillium candidum.*

8. Process according to any one of the preceding claims, **characterised in that** in step (i) the milk is subjected to renneting: the addition of rennet to the milk leads to the formation of a curd which is sliced, moulded, drained.

9. Process according to any one of the preceding claims 1 to 7, **characterised in that** in step (i) the milk is thickened with the aid of one or more gelling agents.

10. Process according to any one of the preceding claims, **characterised in that**, after moulding, the curd, or the gelled cheese body, is acidified and then cured by soaking in a brine bath.

11. Process according to claim 10, **characterised in that** the acidification is carried out in such a manner that the pH is from 3 to 5.5, preferably less than or equal to 5.2, more preferably less than or equal to 5.1.

12. Process according to any one of the preceding claims, **characterised in that** the heat treatment consists in immersion in a water bath for a period of from 40 to 80 seconds, advantageously of approximately 60 seconds.

13. Process according to any one of the preceding claims, **characterised in that** the heat treatment is carried out at a temperature ranging from 80 to 100°C, preferably from 85 to 95°C, advantageously at approximately 90°C.

14. Process according to any one of the preceding claims, **characterised in that** the cheese obtained in step (iv) is subjected to drying.

15. Process according to any one of the preceding claims, **characterised in that** the drying is carried out at a temperature of from -2 to 20°C, with a hygrometry of from 50 to 90% humidity, for a period of from 12 to 48 hours.

16. Process according to any one of the preceding claims, **characterised in that** it further comprises a slicing step.

17. Process according to any one of the preceding claims, **characterised in that** it further comprises a step of packaging under gas in a packaging that forms an oxygen barrier.

18. Process according to claim 17, **characterised in that** the gas comprises from 0 to 50% carbon dioxide and from 50 to 100% nitrogen.

19. Process according to claim 17, **characterised in that** the packaging is a covered plastics tray.

20. Cheese with a soft body and a bloomy rind, obtainable by the process according to any one of claims 1 to 19, **characterised in that** it has in its rind a quantity of mould spores, measured in logarithmic units of spores capable of forming colonies, of approximately from 0.75 to 3.5 units.

21. Cheese according to claim 20, **characterised in that** the mould is *Penicillium candidum.*

22. Cheese according to claim 20 or claim 21 having in its rind a quantity of mould spores of from 1 to 3 logarithmic units and more preferably from 1.5 to 2.5 units.

23. Cheese according to any one of claims 20 to 22, **characterised in that** it has in its body live lactic acid ferments.

24. Cheese according to any one of claims 20 to 23, **characterised in that** it is packaged in slices, under gas, in a packaging that forms a barrier to oxygen.

## Patentansprüche

1. Verfahren zur Herstellung von Käse, wobei das Ausgangsprodukt Milch ist, umfassend die folgenden Schritte:
(i) Herstellen eines Käseteigs aus der Milch, entweder durch Labbehandlung oder durch Gelieren der Milch;
(ii) Animpfen des in Schritt (i) erhaltenen geformten Käses mit Mikroorganismen, von denen wenigstens einer ein Schimmelpilz ist;
(iii) Reifen des Käses von Schritt (ii);
wobei das Verfahren **dadurch gekennzeichnet ist, dass**
(iv) der am Ende von Schritt (iii) erhaltene gereifte Käse einer Wärmebehandlung unterzogen wird, indem er 10 Sekunden bis 5 Minuten bei einer Temperatur von 60 bis 100 °C in eine wasserdampfgesättigte Atmosphäre oder in ein Wasserbad getaucht wird.

2. Verfahren nach Anspruch 1, **dadurch gekennzeichnet, dass** die Milch, die als Ausgangsprodukt verwendet wird, ausgewählt ist aus Kuhmilch, Ziegenmilch, Schafsmilch und Büffelmilch.

3. Verfahren nach irgendeinem der vorhergehenden Ansprüche, **dadurch gekennzeichnet, dass** der Käse aus der folgenden Liste ausgewählt ist: Camembert, Brie, Coulommiers, Pont-l'-Évêque, Saint-Nectaire.

4. Verfahren nach irgendeinem der vorhergehenden Ansprüche, **dadurch gekennzeichnet, dass** der Schimmelpilz ausgewählt ist aus *Penicillium* und *Cylindrocarpon.*

5. Verfahren nach Anspruch 4, **dadurch gekennzeichnet, dass** der Schimmelpilz *Penicillium candidum* ist.

6. Verfahren nach irgendeinem der vorhergehenden Ansprüche, **dadurch gekennzeichnet, dass** das Animpfen ferner die Zugabe ein oder mehrerer Hefen und/oder Milchsäurebakterien umfasst.

7. Verfahren nach irgendeinem der vorhergehenden Ansprüche, **dadurch gekennzeichnet, dass** die Milch einer Vorbehandlung unterzogen wird, ausgewählt aus: Ultrafiltration; Wärmebehandlung; Animpfen mit *Penicillium candidum.*

8. Verfahren nach irgendeinem der vorhergehenden Ansprüche, **dadurch gekennzeichnet, dass** die Milch in Schritt (i) einer Labbehandlung unterzogen wird: die Zugabe von Lab zu der Milch führt zur Bildung einer Gallerte, die zerteilt, geformt und abtropfen gelassen wird.

9. Verfahren nach irgendeinem der vorhergehenden Ansprüche 1 bis 7, **dadurch gekennzeichnet, dass** die Milch in Schritt (i) mit Hilfe ein oder mehrerer Geliermittel verdickt wird.

10. Verfahren nach irgendeinem der vorhergehenden Ansprüche, **dadurch gekennzeichnet, dass** die Gallerte oder der gelierte Käseteig nach dem Formen gesäuert und dann durch Tränken in einem Salzbad gesalzen wird.

11. Verfahren nach Anspruch 10, **dadurch gekennzeichnet, dass** das Säuern so erfolgt, dass der pH 3 bis 5,5, vorzugsweise weniger oder gleich 5,2, besonders bevorzugt weniger oder gleich 5,1 beträgt.

12. Verfahren nach irgendeinem der vorhergehenden Ansprüche, **dadurch gekennzeichnet, dass** die Wärmebehandlung in einem Eintauchen in ein Wasserbad für eine Dauer von 40 bis 80 Sekunden und vorteilhaft von etwa 60 Sekunden besteht.

13. Verfahren nach irgendeinem der vorhergehenden Ansprüche, **dadurch gekennzeichnet, dass** die Wärmebehandlung bei einer Temperatur von 80 bis 100 °C, vorzugsweise von 85 bis 95 °C, vorteilhaft von etwa 90 °C erfolgt.

14. Verfahren nach irgendeinem der vorhergehenden Ansprüche, **dadurch gekennzeichnet, dass** der in Schritt (iv) erhaltene Käse einer Trocknung unterzogen wird.

15. Verfahren nach irgendeinem der vorhergehenden Ansprüche, **dadurch gekennzeichnet, dass** die Trocknung bei einer Temperatur von -2 bis 20 °C bei einer Luftfeuchtigkeit von 50 bis 90 % Feuchte über eine Dauer von 12 bis 48 Stunden erfolgt.

16. Verfahren nach irgendeinem der vorhergehenden Ansprüche, **dadurch gekennzeichnet, dass** es außerdem einen Schritt des Aufschneidens umfasst.

17. Verfahren nach irgendeinem der vorhergehenden Ansprüche, **dadurch gekennzeichnet, dass** es außerdem einen Verpackungsschritt unter Gas in eine Verpackung umfasst, die eine Barriere gegen Sauerstoff bildet.

18. Verfahren nach Anspruch 17, **dadurch gekennzeichnet, dass** das Gas 0 bis 50 % Kohlendioxid und 50 bis 100 % Stickstoff umfasst.

19. Verfahren nach Anspruch 17, **dadurch gekennzeichnet, dass** die Verpackung ein Kunststoffbehälter mit Deckel ist.

20. Weichkäse mit Schimmelrinde, erhältlich durch das Verfahren nach irgendeinem der Ansprüche 1 bis 19, **dadurch gekennzeichnet, dass** er in seiner Rinde eine Menge von Schimmelpilzsporen von etwa 0,75 bis 3,5 Einheiten aufweist, gemessen in logarithmischen Einheiten koloniebildender Sporen.

21. Käse nach Anspruch 20, **dadurch gekennzeichnet, dass** der Schimmelpilz *Penicillium candidum* ist.

22. Käse nach Anspruch 20 oder Anspruch 21, der in seiner Rinde eine Menge an Schimmelpilzsporen von 1 bis 3 logarithmischen Einheiten und besonders bevorzugt von 1,5 bis 2,5 Einheiten aufweist.

23. Käse nach irgendeinem der Ansprüche 20 bis 22, **dadurch gekennzeichnet, dass** er in seinem Teig lebende Milchfermente enthält.

24. Käse nach irgendeinem der Ansprüche 20 bis 23, **dadurch gekennzeichnet, dass** er in Form von Scheiben unter Gas in einer Verpackung verpackt ist, die eine Barriere gegen Sauerstoff bildet.
